# FASCICULE DE BREVET EUROPEEN

(11) **EP 4 426 570 B1**
(45) Date de publication et mention de la délivrance du brevet: **18.03.2026**
(21) Numéro de dépôt: 21805474.0
(22) Date de dépôt: 02.11.2021
(51) Int. Cl.: B60J 1/17, B60J 1/18

(54) **DISPOSITIF VITRÉ POUR PORTE DE VÉHICULE À PANNEAU MOBILE AFFLEURANT ET PORTE CORRESPONDANTE**
GLASVORRICHTUNG FÜR EINE FAHRZEUGTÜR MIT EINER BÜNDIG MONTIERTEN BEWEGLICHEN PLATTE UND ENTSPRECHENDE TÜR
GLAZED DEVICE FOR A VEHICLE DOOR, COMPRISING A FLUSH-FITTED MOVABLE PANEL, AND CORRESPONDING DOOR

(43) Date de publication de la demande: 11.09.2024
(73) Titulaire: Advanced Comfort Systems France SAS - ACS France, 79302 Bressuire (FR)
(72) Inventeur: CHARGE, Philippe, 79300 BRESSUIRE (FR); DESBOIS, Mickaël, 44115 HAUTE GOULAINE (FR); TURC, Thierry, 79300 BRESSUIRE (FR)
(74) Mandataire: Vidon Brevets & Stratégie
(86) Numéro de dépôt international: PCT/EP2021/080382
(87) Numéro de publication internationale: WO 2023/078531

(56) Documents cités:
- FR-A1- 2 839 020
- US-A- 6 125 587
- US-A1- 2003 213 179
- US-A1- 2008 216 410

## Description

### 1. Domaine de l'invention

Le domaine de l'invention est celui des véhicules automobiles.

Plus précisément, l'invention concerne l'équipement des baies ménagées dans les véhicules, et notamment les portes de véhicule.

En particulier, l'invention concerne les portes de véhicule équipées d'au moins un panneau vitré mobile sensiblement verticalement, notamment pour passer d'une position fermée à une position ouverte dans laquelle il pénètre intégralement ou partiellement dans un caisson inférieur de carrosserie (le panneau mobile pouvant, bien sûr, prendre généralement, une pluralité de positions intermédiaires).

Une telle porte de véhicule peut notamment être une porte latérale, mais l'invention peut également s'appliquer, par exemple, aux portes battantes et/ou coulissantes d'un véhicule, y compris les portes arrière, les hayons... voire une partie fixe de la carrosserie d'un véhicule.

### 2. Art antérieur

Des exemples de tels dispositifs sont décrits notamment dans les documents de brevet EP1422091, EP1612072, US 2003/0213179 A1 ou EP3647093.

Selon cette approche, un cadre est prévu, du côté orienté vers l'intérieur du véhicule, portant un ou plusieurs (classiquement deux) rails, coopérant avec des patins solidaires du panneau vitré mobile, et fixés sur la face de celui-ci orientée vers l'intérieur du véhicule. Le cadre peut, le cas échéant, être tronqué et être limité à des montants portant les rails.

Cette technique est intéressante, car elle permet de concevoir des designs originaux, du fait de la suppression du cadre de porte classique, tout en conservant un guidage et un maintien efficaces du panneau mobile.

On connaît également des dispositifs comprenant une partie fixe vitrée, dans laquelle est ménagée une ouverture, qui peut être libérée ou obturée par un panneau mobile guidé le long de rails montés sur la face de la partie fixe vitrée orientée vers l'intérieur du véhicule. Le demandeur a déposé de nombreux brevets sur cette approche, dont le principe général de cette technique est notamment décrit dans les documents de brevet EP778168 et EP857844. Dans ce cas, le panneau mobile est généralement mobile selon un axe horizontal et avec un mouvement complexe, dit de louvoiement.

Il serait intéressant, dans certaines situations, de combiner les deux approches, à savoir la présence d'une partie fixe vitrée et d'un panneau mobile verticalement pour s'escamoter au moins en partie dans un caisson de porte, et venant obturer une ouverture dont trois côtés, deux bords latéraux et un bord supérieur, sont définis dans la partie fixe. Cette combinaison n'est cependant ni aisée ni directe. La mise en place d'une ouverture sur le bord inférieur du panneau vitré fixe nécessite une approche spécifique du maintien et du déplacement du panneau mobile. Il est essentiel de maximiser le clair de baie, et donc de réduire autant que faire se peut l'encombrement des éléments rapportés sur la partie fixe (rails, cadre...), la sécurité, la simplicité d'assemblage et de montage du dispositif...

Une difficulté importante est d'assurer efficacement et de façon fiable et durable le guidage du panneau mobile, l'étanchéité (y compris en présence d'un jet haute pression).

### 3. Objectifs de l'invention

L'invention a notamment pour objectif de pallier ces inconvénients de l'art antérieur.

Plus précisément, l'invention a pour objectif, dans au moins un mode de réalisation, de fournir un dispositif vitré pour la réalisation d'une porte de véhicule, qui présente une étanchéité efficace.

Un autre objectif de l'invention, selon au moins un mode de réalisation, est de fournir un tel dispositif vitré qui offre un clair de baie maximisé, tout en étant fiable et durable dans le temps.

### 4. Exposé de l'invention

Ces objectifs, ainsi que d'autres qui apparaîtront par la suite sont atteints à l'aide d'un dispositif vitré destiné à être assemblé à un caisson de porte pour former une porte de véhicule automobile ou à un élément de carrosserie, comprenant une partie fixe vitrée et un panneau vitré mobile en coulissement par rapport à ladite partie fixe selon un axe sensiblement vertical, pouvant sélectivement obturer ou libérer, au moins partiellement, une ouverture ménagée dans ladite partie fixe, ledit panneau mobile étant guidé le long de rails portés par ladite partie fixe.

Selon l'invention, lesdits rails sont solidarisés par un cordon de colle à ladite partie fixe, le long desdits bords latéraux, et un cadre s'étendant au moins sur les bords latéraux et supérieur de ladite ouverture est solidarisé aux rails pour ses bords latéraux et collé à ladite partie fixe à l'aide dudit cordon de colle, pour son bord supérieur.

Ainsi, le même cordon de colle assure la solidarisation à la partie fixe des rails, sur les bords latéraux de l'ouverture, et du cadre, pour le bord supérieur. Ceci permet notamment de réduire la largeur de l'ensemble formé par le cadre et le rail, notamment sur les bords latéraux, et donc d'augmenter le clair de baie. Le cadre peut être solidarisé aux rails (et non directement à la partie fixe), au niveau de ces bords latéraux.

Selon une caractéristique particulière, le dispositif de l'invention comprend des moyens de contrôle de l'étanchéité au niveau d'une jonction entre la partie supérieure desdits rails et ledit cadre.

En effet, les inventeurs ont identifié que l'approche innovante de l'invention peut introduire, dans certaines situations, un problème d'étanchéité, au niveau de la transition entre le collage du rail et le collage du cadre, qui peuvent nécessiter la mise en œuvre de moyens spécifiques.

Selon un premier mode de réalisation de ces moyens de contrôle de l'étanchéité, chacun desdits rails porte un joint d'étanchéité présentant au moins deux lèvres d'étanchéité, une première lèvre venant en contact avec le chant de ladite partie mobile et une seconde lèvre venant en contact avec le bord de la partie fixe, le long dudit rail.

Cette approche est simple à mettre en œuvre, et repose sur une approche nouvelle et non évidente d'un tel joint, présentant une lèvre le long du rail.

Selon un deuxième mode de réalisation de ces moyens de contrôle de l'étanchéité, un cordon d'étanchéité ou un joint est placé entre le cadre et chaque rail, avant dépose du cordon de collage, dit cordon de collage principal, desdits rails, respectivement dudit cadre, sur ladite partie fixe.

Ceci permet d'empêcher le passage de l'eau, au niveau de la transition entre le rail et le cadre.

Ledit cordon d'étanchéité peut notamment comprendre de la colle ou un produit d'étanchéité.

Selon un troisième mode de réalisation de ces moyens de contrôle de l'étanchéité la partie supérieure de chaque rail présente un angle non nul par rapport à l'horizontale, la portion de rail éloignée de ladite ouverture étant plus haute que la portion de rail proche de ladite ouverture.

Cette forme particulière du rail permet de diriger efficacement l'eau vers l'extérieur.

Ledit angle est de préférence supérieur ou égal à 25°.

Selon un quatrième mode de réalisation de ces moyens de contrôle de l'étanchéité, on prévoit que la partie supérieure dudit rail recouvre une portion dudit cadre.

A nouveau, ceci permet d'empêcher le passage de l'eau.

Notamment, la partie supérieure dudit rail peut être découpé de façon que la discontinuité se trouve plus bas du côté orienté vers ladite ouverture que du côté orienté vers ladite partie fixe.

En particulier, ladite discontinuité peut présenter une forme concave sensiblement en arc de cercle.

Deux, ou plus, de ces modes de réalisation peuvent bien sûr être combinés en cas de besoin.

Selon un autre aspect particulier, ledit cadre et/ou lesdits rails peut présenter des prolongements verticaux s'étendant au-delà de la partie inférieure de ladite partie fixe.

Notamment, au moins un desdits prolongements peut porter une butée assurant une limitation du déplacement dudit panneau mobile par rapport à ladite partie fixe selon deux directions sensiblement perpendiculaires audit axe sensiblement vertical, au moins pendant l'assemblage dudit panneau mobile sur ladite partie fixe.

Ceci permet de faciliter le montage du panneau mobile.

L'invention concerne également un véhicule automobile comprenant au moins un dispositif vitré tel que décrit ci-dessus.

Notamment, dans un tel véhicule, ledit dispositif d'obturation peut être monté en partie supérieure d'une porte dudit véhicule, ledit panneau mobile se déplaçant au moins partielle dans une partie inférieure de ladite porte.

### 5. Liste des figures

L'invention, ainsi que les différents avantages qu'elle présente, seront plus facilement compris grâce à la description qui va suivre, donnée à titre simplement illustratif et non limitatif en référence aux figures annexées, parmi lesquelles :
- la figure 1 et la figure 2 sont des vues en coupe schématique d'un mode de réalisation d'un dispositif vitré de porte de véhicule selon l'invention, respectivement vu du côté orienté vers l'extérieur et l'intérieur du véhicule ;
- la figure 3 est une vue éclatée des principaux éléments constituant le dispositif des figures 1 et 2 ;
- la figure 4 est une vue schématique du dispositif des figures 1 et 2, faisant apparaître l'emplacement de la section de la figure 5 ;
- la figure 5 est une section du cadre et du rail du dispositif de la figure 4, selon un premier mode de réalisation ;
- la figure 6 est une vue simplifiée du dispositif des figures 1 et 2, vu de l'intérieur, faisant apparaître l'emplacement de la section de la figure 7 ;
- la figure 7 est une section de la partie supérieure du cadre du dispositif de la figure 6, selon le premier mode de réalisation ;
- la figure 8 est une section du cadre et du rail du dispositif de la figure 4, selon un deuxième mode de réalisation ;
- la figure 9 est une section de la partie supérieure du cadre du dispositif de la figure 6, selon le deuxième mode de réalisation ;
- la figure 10 est une portion de la figure 1, illustrant la zone dans laquelle un aspect spécifique d'étanchéité est traité selon l'invention ;
- la figure 11 présente la portion du cadre et du rail de la figure 10, sans le panneau mobile et sans les joints ;
- la figure 12 présente la portion du cadre et du rail de la figure 10 (cadre et rail seuls) ;
- la figure 13, la figure 14 et la figure 15 sont différentes vues illustrant le risque d'infiltration d'eau identifié par les inventeurs ;
- la figure 16 illustre une première solution d'étanchéité, mettant en œuvre une lèvre dédiée d'un joint d'étanchéité ;
- les figures 17A et 17B illustrent une deuxième solution d'étanchéité, mettant en œuvre un cordon ou un joint d'étanchéité dédié ;
- la figure 18 illustre une troisième solution d'étanchéité, mettant en œuvre une inclinaison entre le cadre et le rail ;
- la figure 19 illustre une quatrième solution d'étanchéité, mettant en œuvre un recouvrement, ou tuilage, entre le rail et le cadre ;
- la figure 20 et la figure 21 sont deux autres vues de la quatrième solution ;
- la figure 22 présente un autre aspect de l'invention, comprenant des butées de blocage de la partie basse du panneau mobile ;
- les figures 23A et 23B sont deux vues agrandies d'une des butées de la figure 16 ;
- la figure 24 est une vue générale du dispositif de l'invention, mettant en œuvre un deuxième mode de réalisation de moyens de blocage de la partie basse du panneau mobile ;
- la figure 25 présente plus précisément la portion entourée en pointillés de la figure 24, faisant apparaître l'axe A de section de la figure 26 ;
- la figure 26 illustre la section selon l'axe A de la figure 25 ;
- la figure 27 illustre la section selon l'axe B de la figure 26.

### 6. Description détaillée de modes de réalisation de l'invention

### 6.1 structure générale

L'invention concerne donc une nouvelle approche de l'assemblage d'un panneau mobile vitré et d'une partie vitrée fixe d'une porte (porte latérale, porte arrière, hayon, porte de cabine...), voire d'une partie fixe de la carrosserie de véhicule automobile. La vitre, ou panneau mobile, est alignée et affleurante avec au moins un bord de la carrosserie, c'est-à-dire qu'aucun cadre ou élément de cadre ne fait saillie vers l'extérieur du véhicule, par rapport au plan de cette partie vitrée, et est guidée de façon à pénétrer dans le caisson de porte (ou un élément équivalent de carrosserie), selon une direction verticale.

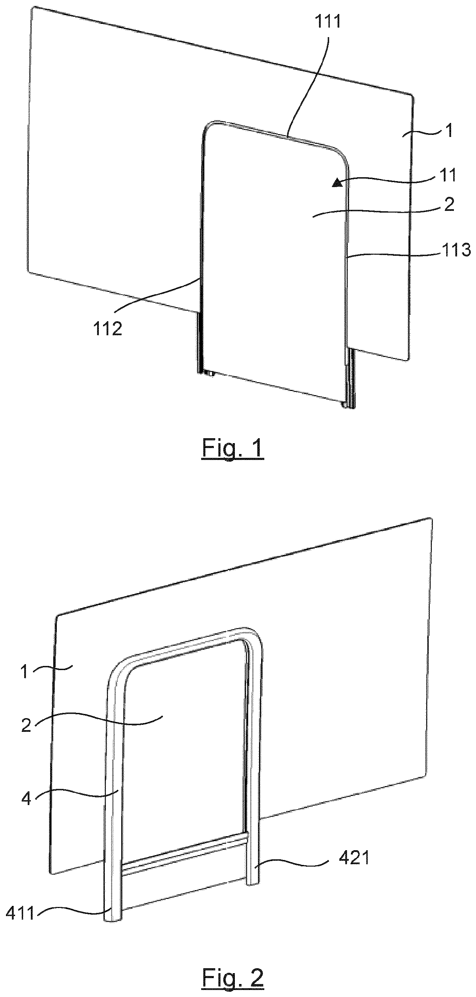

Les figures 1 et 2 illustrent schématiquement un tel dispositif, vu côté correspondant à l'extérieur, respectivement à l'intérieur, du véhicule. Ce dispositif est destiné à être solidarisé, via la partie fixe, à un caisson de porte ou à la carrosserie du véhicule, non représenté, s'étendant sous le dispositif.

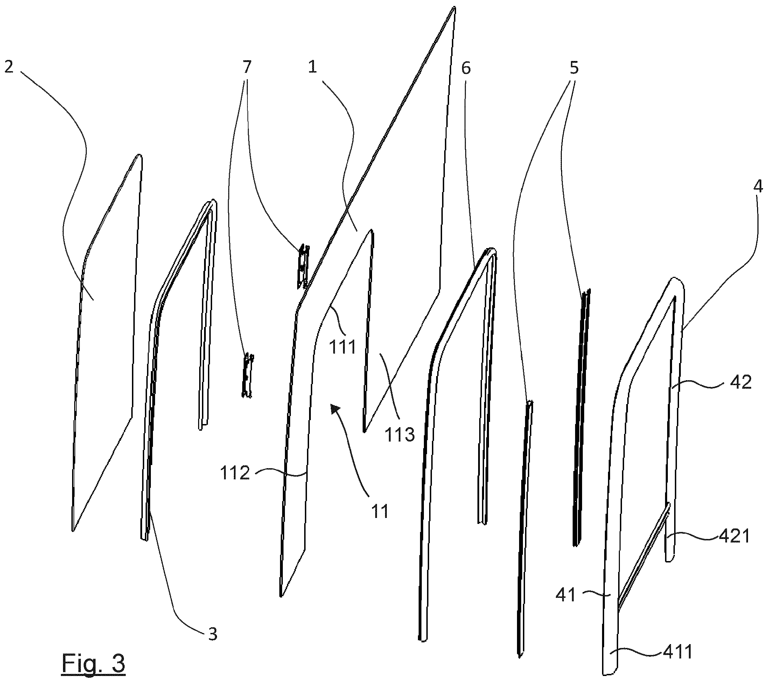

Les principaux éléments constitutifs du dispositif apparaissent sur la vue éclatée de la figure 3. Le dispositif comprend ainsi une partie fixe 1, qui peut notamment être une vitre d'un seul tenant dont les bords extérieurs correspondent aux bords la partie supérieure de la porte. Une ouverture 11 est découpée dans cette partie fixe, définie par un bord supérieur 111 et deux bords latéraux verticaux 112 et 113 de la partie fixe. La partie inférieure de l'ouverture n'est pas délimitée dans la partie fixe mais formée dans son bord inférieur, pour permettre le déplacement du panneau mobile 2.

Ce panneau mobile 2, qui peut également être vitré, est donc conçu et dimensionné pour venir s'inscrire dans l'ouverture 11, dans une position fermée, et pour se décaler vers le bas, typiquement à l'intérieur du caisson de porte, dans une position ouverte. Ce déplacement peut par exemple être assuré par un moteur électrique et une transmission adaptée (non représentés) reliant la partie basse du panneau mobile 2 au moteur.

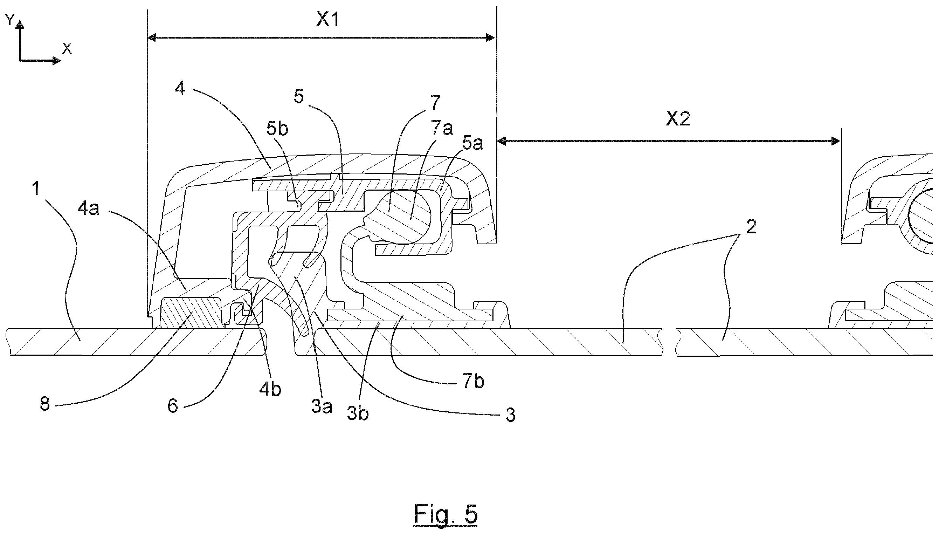

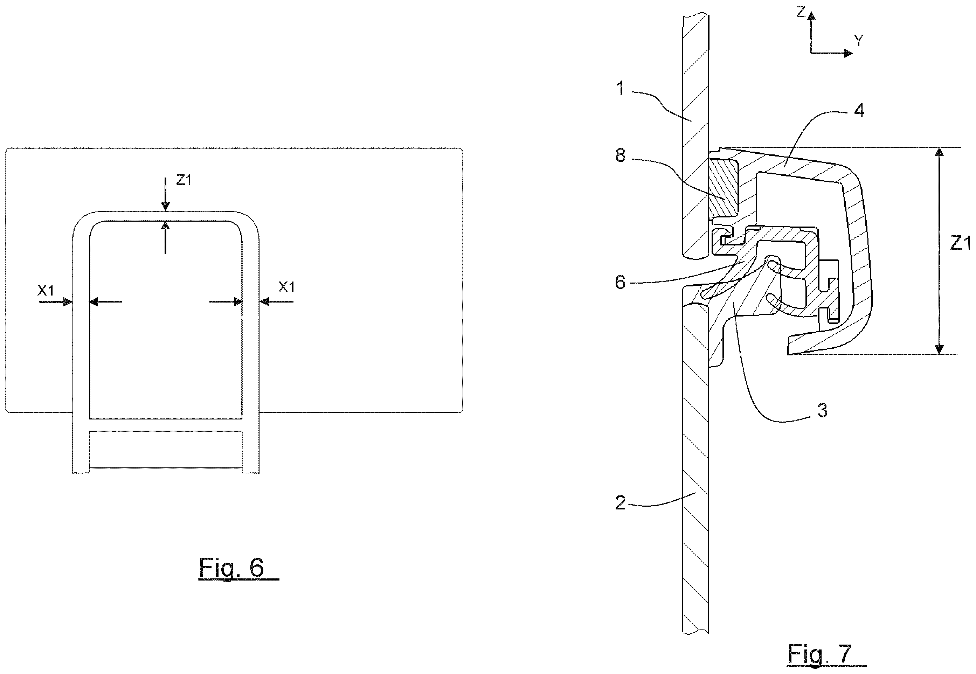

Le panneau mobile 2 reçoit une encapsulation 3, s'étendant dans cet exemple sur les bords latéraux et le bord supérieur du panneau. Cette encapsulation 3 peut notamment s'étendre sur le chant du panneau mobile et sur la périphérie de celui-ci, sur la face orientée vers l'intérieur du véhicule, sur quelques millimètres ou centimètres, comme ceci apparaît sur les sections des figures 5 et 6 par exemple, commentées par la suite.

La partie fixe 1 porte un cadre 4, sur sa face orientée vers l'intérieur du véhicule, au moins le long du bord supérieur 111 et des bords latéraux verticaux 112 et 113. Les portions latérales 41, 42 du cadre portent et/ou sont portées par des rails 5, permettant le maintien et le guidage du panneau mobile 2. Comme ceci apparaît notamment sur les figures 1 et 2, le cadre et/ou les rails se prolongent au-dessous de la partie fixe 1 (parties 411 et 421).

Un joint d'étanchéité 6 est monté dans le cadre 4, le long de ses portions latérales et supérieure.

Le panneau mobile 2 est équipé de patins de guidage 7, aptes à coopérer avec les rails 5. Ils peuvent notamment être solidarisés directement à l'encapsulation, ou via un support intermédiaire.

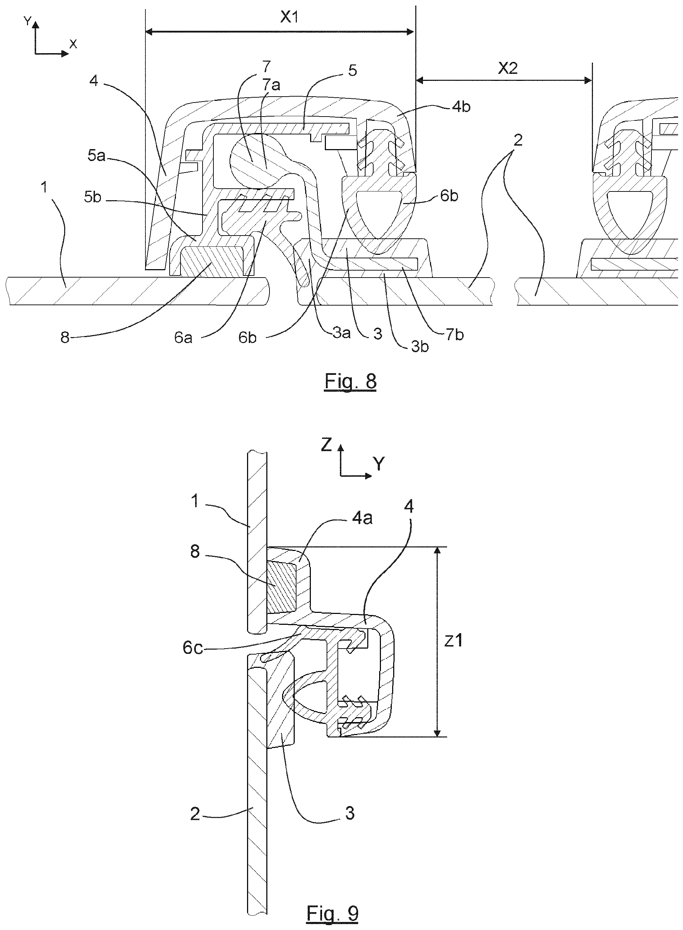

Le cadre et les rails sont solidarisés à la partie fixe par un cordon de colle principal, référencé 8 sur les figures 5 et 8.

### 6.3 assemblage rail et cadre - première approche

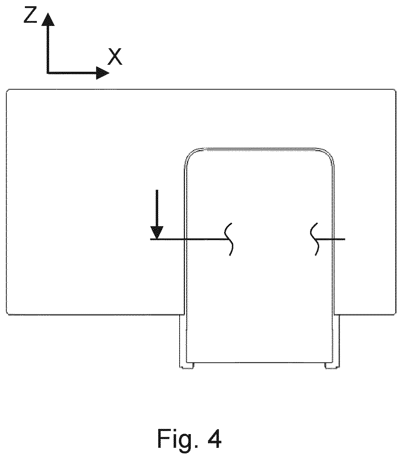

La figure 4 est une vue simplifiée du dispositif, précisant l'emplacement de la section de la figure 5. Sur cette figure 5, on présente un premier exemple de conception du cadre, des rails et des patins.

Selon cette approche, le cadre 4 est collé à la partie fixe 1, via un cordon de colle 8 se logeant dans le logement 4a prévu à cet effet. Le cadre 4 porte un rail de guidage 5.

Le joint d'étanchéité 6, qui présente trois lèvres est solidarisé d'une part au cadre 4, via la portion d'accrochage 4b, et d'autre part au rail 5, via la portion d'accrochage 5b.

Le panneau mobile 2 porte une encapsulation 3, dont une portion 3a s'étend vers l'intérieur du véhicule en s'éloignant du panneau mobile, et forme une surface latérale et une surface supérieure coopérant avec les lèvres du joint d'étanchéité. Cette portion 3a recouvre également le chant du panneau mobile.

Une portion 3b s'étend sur la périphérie du panneau mobile 5, sur sa face orientée vers l'intérieur du véhicule, et reçoit une extrémité 7b du patin 7, de façon à le maintenir.

Dans ce mode de réalisation, le patin présente une section en forme générale de C. Il est en quelque sorte replié sur lui-même, les deux extrémités 7a et 7b étant sensiblement superposées, l'une au-dessus de l'autre (selon un axe perpendiculaire au plan défini par le panneau mobile). Ceci permet de réduire la largeur X1 du cadre et donc de bénéficier d'un clair de baie (X2) important.

Dans le même objectif, et comme illustré par la figure 6, il est possible que le cadre soit moins large (Z1) en partie supérieure, qui ne contient pas de rail. Selon la section de la figure 7, on constate ainsi que la largeur de l'encapsulation 3 est réduite, de même que celle du cadre 4, qui maintient le joint d'étanchéité 6 par ses deux côtés.

Selon ce mode de réalisation, le cadre est collé à la partie fixe sur toute sa périphérie.

### 6.4 assemblage rail et cadre - deuxième approche

Il est cependant souhaitable de réduire encore la largeur du cadre. L'approche illustrée par la figure 8 (section à l'emplacement défini sur la figure 4) permet d'atteindre cet objectif.

Le panneau mobile 2 porte une encapsulation 3, dont une portion 3a s'étend vers la partie fixe en s'éloignant du panneau mobile, et forme une surface latérale coopérant avec une lèvre d'un premier joint d'étanchéité 6a. Cette portion 3a recouvre également le chant du panneau mobile.

Une portion 3b de l'encapsulation s'étend sur la périphérie du panneau mobile 5, sur sa face orientée vers l'intérieur du véhicule, et reçoit une extrémité 7b du patin 7, de façon à le maintenir.

Dans cette mise en œuvre, le patin présente une section de forme générale en S, l'extrémité de guidage 7a, de forme essentiellement cylindrique, étant décalé au-delà du panneau mobile 2, au moins en partie au-dessus de la partie fixe 1. D'autres sections sont cependant envisageables dans ce mode de réalisation, y inclus la section en C.

Selon cette deuxième approche, le rail 5 est collé, via sa partie 5a formant logement de réception du cordon de colle 8, à la partie fixe. Ce rail 5 porte le cadre 4, par exemple par emboîtement, pour les portions latérales du cadre. Il porte également le joint d'étanchéité 6a, via un logement 5b. Ceci permet de réduire efficacement la largeur globale du cadre, et donc d'optimiser le clair de baie.

L'extrémité 4b du cadre orientée vers l'ouverture porte un deuxième joint d'étanchéité 6b, venant en contact avec la partie supérieure de l'encapsulation 3.

La figure 9 illustre la section de la portion supérieure du cadre, selon ce second mode de réalisation. Du fait qu'il n'y a bien sûr pas de rail sur cette portion supérieure, le cadre 4 est collé directement à la partie fixe 1, via le cordon de colle 8 placé dans le logement 4b. Un seul joint d'étanchéité 6c, de section sensiblement différente de celle du joint 6b, est porté par le cadre.

Ainsi, sur les parties latérales, ce sont les rails 5 qui sont collés à la partie fixe, alors que c'est le cadre 4 qui est collé à la partie fixe dans sa partie supérieure, par le même cordon de colle 8, circulant dans les logements 5b, 4b respectivement.

### 6.5 identification d'un risque d'infiltration

Les inventeurs ont identifié que cette solution, selon ce deuxième mode de réalisation de l'assemblage du cadre et du rail en particulier, présente de nombreux avantages, mais également un risque significatif, dû à la structure particulière du dispositif, et plus précisément au fait que le cadre s'étend sur trois côtés, alors que les rails s'étendent uniquement sur les bords latéraux.

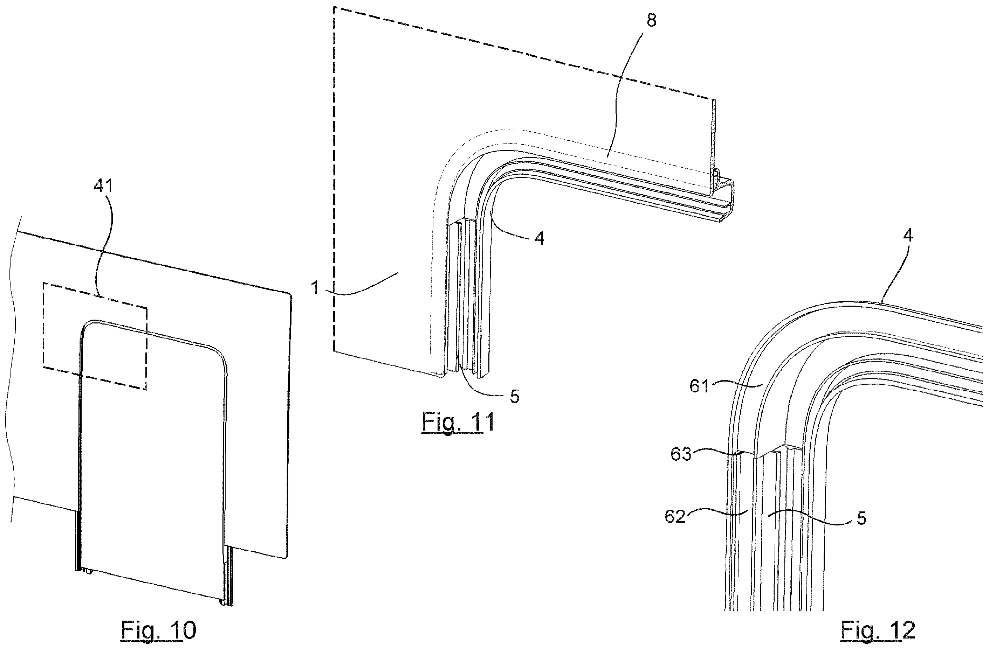

La figure 10 présente la zone 41, en pointillés, dans laquelle ce risque est identifié. Cette zone est illustrée de façon plus précise sur les figures 11 (vue sans le panneau mobile et sans les joints) et 12 (vue du cadre et du rail seuls). Comme ceci apparaît sur la figure 12 notamment, le cordon de colle 8 se loge dans le cadre 4, le long de la face d'appui 61 du cordon de colle sur le cadre, en partie supérieure du cadre, et dans le rail 5 le long de la face d'appui 62 du cordon de colle sur le rail. Le rail 5 portant le cadre 4, il apparaît une discontinuité 63 entre les deux faces d'appui 61 et 62, avec un jeu possible du fait des tolérances d'assemblage.

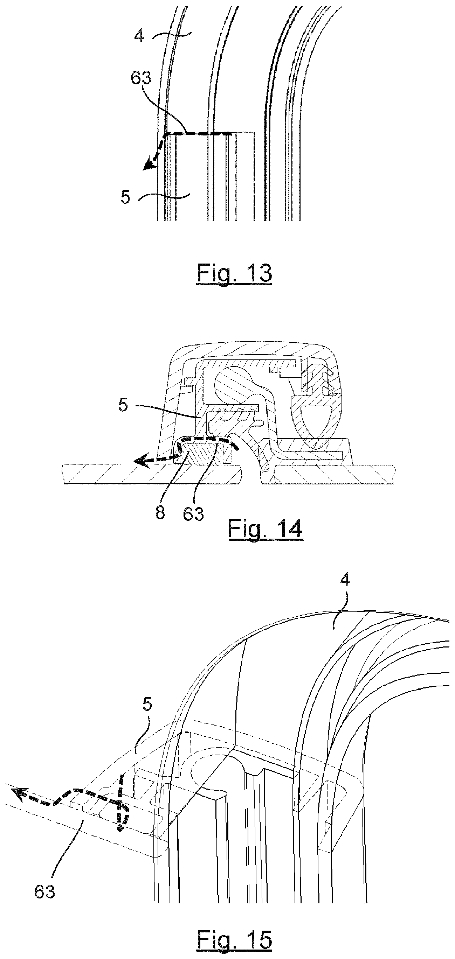

Comme illustré sur les figures 13, 14 et 15 par les flèches en pointillés, il existe un risque d'infiltration d'eau au niveau de la discontinuité 63 entre le cadre 4 et le rail 5, vers l'intérieur du véhicule.

L'identification de ce problème n'est pas évidente, la présence d'un joint d'étanchéité 6 apparaissant généralement suffisant à l'homme du métier, et résulte d'une analyse approfondie de la part des inventeurs de cette approche, qui ont en conséquence proposé la mise en œuvre de moyens de contrôle de l'étanchéité au niveau de cette discontinuité 63.

On décrit ci-après quatre exemples de contrôle de l'étanchéité, qui peuvent bien sûr être combinés entre eux.

### 6.6 première solution d'étanchéité

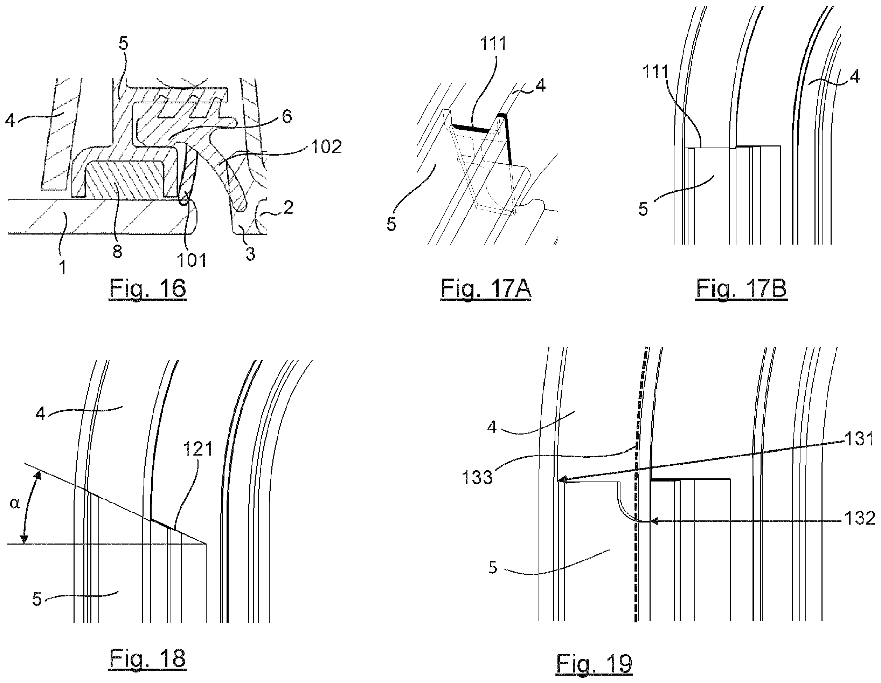

Selon une première approche, illustrée en figure 16, il est proposé d'ajouter une deuxième lèvre 101 au joint d'étanchéité 6, qui comprend classiquement au moins une lèvre 102 prévue pour venir en contact avec le panneau mobile 2 et plus précisément l'encapsulation 3 qu'il porte. Il est en effet classique de prévoir une ou plusieurs lèvres 102 coopérant avec le panneau mobile. L'invention prévoit en outre au moins une lèvre 101, qui s'étend le long de la fixation du rail (dans ce mode de réalisation) à la partie fixe, pour venir en contact avec cette partie fixe, sur son bord latéral, sur le profil d'étanchéité. Ainsi, cette lèvre s'oppose aux infiltrations illustrées sur la figure 14.

### 6.7 deuxième solution d'étanchéité

Selon une deuxième solution, illustrée par les figures 17A et 17B, on place un cordon ou un joint 111 (distinct du cordon de colle principal 8 reçu ensuite par les faces d'appui 61 et 62 (figure 12)), qui peut être un cordon de colle ou d'un produit d'étanchéité adapté, avant dépose du cordon de colle principal. A nouveau, ceci permet de s'opposer efficacement aux infiltrations.

### 6.8 troisième solution d'étanchéité

Selon une troisième solution, illustrée par la figure 18, la zone de jonction 121 formant la discontinuité est inclinée, la partie orientée vers l'extérieur (vers l'ouverture dans la partie fixe) étant plus basse que la partie orientée vers l'intérieur, et forme un angle α de 25° ou plus.

### 6.9 quatrième solution d'étanchéité

Selon une quatrième solution, illustrée par les figures 19 à 21, on met en œuvre un recouvrement, ou tuilage, entre le rail 5 et le cadre 4, de façon que la discontinuité se trouve plus bas du côté extérieur (vers l'ouverture) que du côté intérieur. Ainsi, la zone 131 de sortie de l'eau côté intérieur est plus haute que la zone 132 d'entrée de l'eau côté extérieur. Les pointillés 133 illustrent la limite extérieure du cordon de colle 8.

Ce recouvrement peut présenter, du côté orienté vers l'extérieur, une forme concave sensiblement en arc de cercle, facilitant l'évacuation de l'eau.

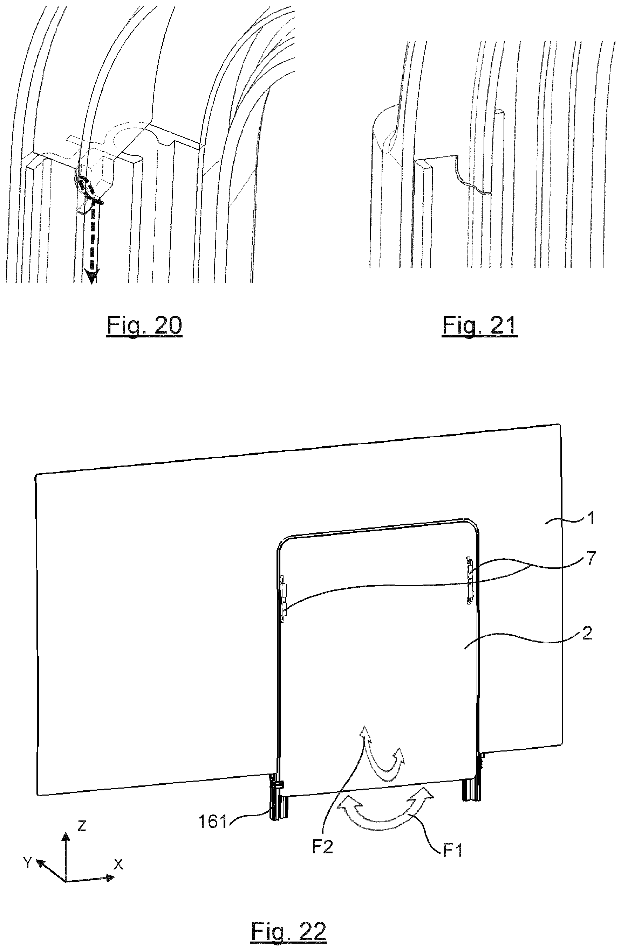

Les figures 20 et 21 illustrent cette solution à l'aide de deux vues en perspective partielle, sans le panneau mobile et sans les joints. Comme on le voit à l'aide de la flèche en pointillés de la figure 20, l'eau qui s'infiltre et qui remonte par capillarité est évacuée le long du rail avant d'atteindre le point haut.

### 6.10 blocage de la partie basse du panneau mobile - première solution

Le panneau mobile 2 étant guidé par deux patins 7 qui sont situés sur sa partie haute, sa partie basse peut être soumise, comme illustré sur la figure 22, à des déplacements intempestifs selon les axes X (flèche F1) et Y (flèche F2), du fait de la souplesse du guidage, en particulier lors du montage, avant la fixation du mécanisme de lève-vitre.

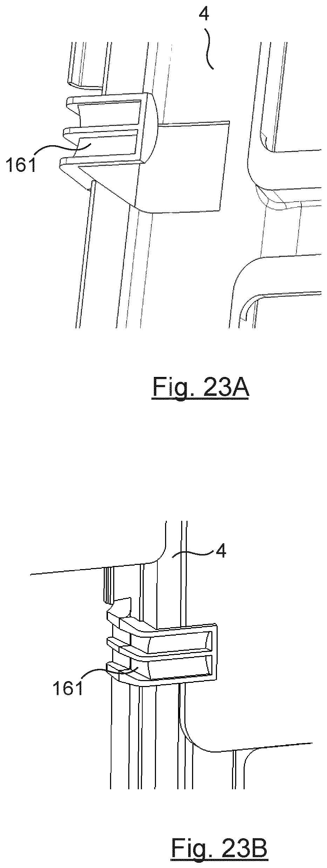

Pour éviter, ou à tout le moins réduire, ces déplacements intempestifs en X et en Y, il peut être prévu une ou deux butées 161 formées dans la partie basse du cadre ou du rail (sous le niveau inférieur de la partie fixe), ou solidarisé à celui-ci. Notamment, ces butées peuvent être directement intégrées au cadre 4, comme illustré sur les figures 23A et 23B, au moins sur un des côtés du cadre.

### 6.11 blocage de la partie basse du panneau mobile - deuxième solution

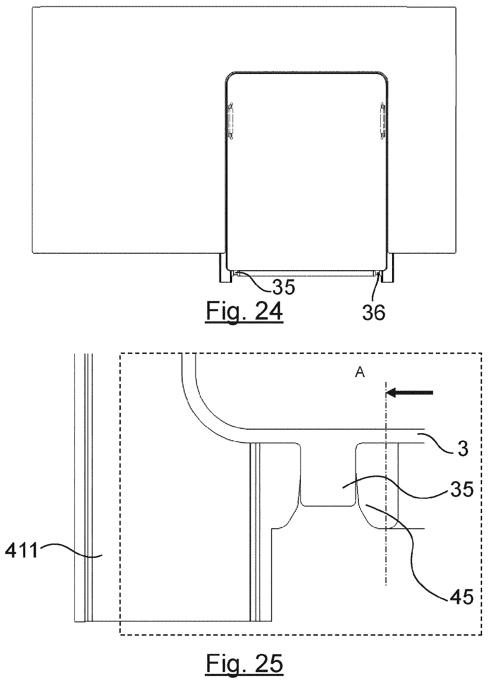

Comme illustré sur les figures 24 à 27, lorsque le panneau mobile 4 porte une encapsulation, on peut prévoir que celle-ci intègre directement une ou deux butées 35, 36, coopérant avec les rails et/ou le cadre.

La figure 24 présente une vue générale du dispositif, dont la partie entourée en pointillés est agrandie sur la figure 25. L'encapsulation 3 du panneau mobile présente une butée 35, coopérant avec un élément complémentaire 45 solidaire de la partie fixe, et notamment de la portion inférieure 411 du cadre, d'une traverse centrale reliant les deux parties latérales du cadre ou d'une pièce rapportée sur le rail ou sur le cadre.

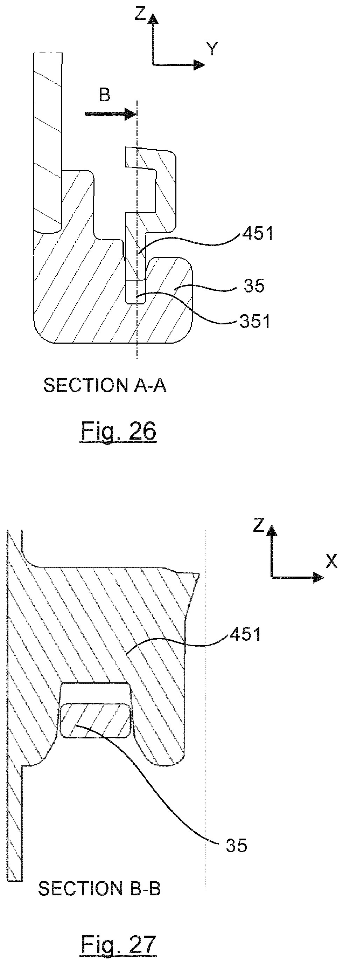

Comme on le voit sur la section A-A de la figure 26, le blocage du panneau mobile suivant l'axe Y est assuré par la rainure 351 formée dans la butée 35, coopérant avec une portion 451 de la partie fixe, pénétrant dans la rainure.

Le blocage du panneau mobile suivant l'axe X est illustré par la section B-B de la figure 27. La butée 351 formée dans l'encapsulation est maintenue dans la partie fixe 451.

## Revendications

1. Dispositif vitré destiné à être assemblé à un caisson de porte pour former une porte de véhicule automobile ou à un élément de carrosserie, comprenant une partie fixe vitrée (1) et un panneau vitré mobile (2) en coulissement par rapport à ladite partie fixe selon un axe sensiblement vertical, pouvant sélectivement obturer ou libérer, au moins partiellement, une ouverture (11) ménagée dans ladite partie fixe, ledit panneau mobile étant guidé le long de rails (5) portés par ladite partie fixe,
**caractérisé en ce que** lesdits rails (5) sont solidarisés par un cordon de colle (8) à ladite partie fixe, le long des bords latéraux (112, 113) de ladite ouverture, et **en ce qu'**un cadre (4), s'étendant au moins sur les bords latéraux et supérieur de ladite ouverture (11), est solidarisé aux rails (5) pour ses bords latéraux (41, 42) et collé à ladite partie fixe à l'aide dudit cordon de colle, pour son bord supérieur.

2. Dispositif selon la revendication 1, **caractérisé en ce qu'**il comprend des moyens de contrôle de l'étanchéité au niveau d'une jonction entre la partie supérieure desdits rails et ledit cadre.

3. Dispositif selon la revendication 2, **caractérisé en ce que** chacun desdits rails porte un joint d'étanchéité présentant au moins deux lèvres d'étanchéité (6), une première lèvre (102) venant en contact avec le chant de ladite partie mobile et une seconde lèvre (101) venant en contact avec le bord de la partie fixe, le long dudit rail.

4. Dispositif selon la revendication 2, **caractérisé en ce qu'**un cordon d'étanchéité ou un joint est placé entre le cadre et chaque rail, avant dépose du cordon de collage, dit cordon de collage principal, desdits rails, respectivement dudit cadre, sur ladite partie fixe.

5. Dispositif selon la revendication 4, **caractérisé en ce que** ledit cordon d'étanchéité comprend de la colle ou un produit d'étanchéité.

6. Dispositif selon la revendication 2, **caractérisé en ce que** la partie supérieure de chaque rail présente un angle non nul par rapport à l'horizontale, la portion de rail éloignée de ladite ouverture étant plus haute que la portion de rail proche de ladite ouverture.

7. Dispositif selon la revendication 6, **caractérisé en ce que** ledit angle est supérieur ou égal à 25°.

8. Dispositif selon la revendication 2, **caractérisé en ce que** la partie supérieure dudit rail (5) recouvre une portion dudit cadre (4).

9. Dispositif selon la revendication 8, **caractérisé en ce que** la partie supérieure dudit rail (5) est découpé de façon que la discontinuité se trouve plus bas du côté orienté vers ladite ouverture (11) que du côté orienté vers ladite partie fixe (1).

10. Dispositif selon la revendication 9, **caractérisé en ce que** ladite discontinuité présente une forme concave sensiblement en arc de cercle.

11. Dispositif selon la revendication 1, **caractérisé en ce que** ledit cadre et/ou lesdits rails présentent des prolongements verticaux (411, 421) s'étendant au-delà de la partie inférieure de ladite partie fixe.

12. Dispositif selon la revendication 11, **caractérisé en ce qu'**au moins un desdits prolongements porte une butée (161) assurant une limitation du déplacement dudit panneau mobile par rapport à ladite partie fixe selon deux directions sensiblement perpendiculaires audit axe sensiblement vertical, au moins pendant l'assemblage dudit panneau mobile sur ladite partie fixe.

13. Véhicule automobile **caractérisé en ce qu'**il comprend au moins un dispositif vitré selon l'une quelconque des revendications 1 à 12.

14. Véhicule selon la revendication 13, **caractérisé en ce que** ledit dispositif d'obturation est monté en partie supérieure d'une porte dudit véhicule, ledit panneau mobile se déplaçant au moins partielle dans une partie inférieure de ladite porte.

## Patentansprüche

1. Glasvorrichtung, die dazu bestimmt ist, an einem Türkasten, um eine Kraftfahrzeugtür zu bilden, oder an einem Karosserieelement montiert zu werden, umfassend ein fixes Glasteil (1) und eine Glasplatte (2), die in Bezug zu dem fixen Teil entlang einer im Wesentlichen vertikalen Achse gleitend beweglich ist, die selektiv eine in dem fixen Teil vorgesehene Öffnung (11) verschließen oder zumindest teilweise freigeben kann, wobei die bewegliche Platte entlang von Schienen (5) geführt wird, die von dem fixen Teil getragen werden,
**dadurch gekennzeichnet, dass** die Schienen (5) durch eine Kleberschnur (8) mit dem fixen Teil entlang der Seitenränder (112, 113) der Öffnung verbunden sind, und dass ein Rahmen (4), der sich zumindest an den Seitenrändern und dem oberen Rand der Öffnung (11) erstreckt, mit den Schienen (5) bezüglich seiner Seitenränder (41, 42) verbunden und an dem fixen Teil mit Hilfe der Kleberschnur bezüglich seines oberen Randes angeklebt ist.

2. Vorrichtung nach Anspruch 1, **dadurch gekennzeichnet, dass** sie Mittel zur Kontrolle der Dichtigkeit im Bereich einer Verbindung zwischen dem oberen Teil der Schienen und dem Rahmen umfasst.

3. Vorrichtung nach Anspruch 2, **dadurch gekennzeichnet, dass** jede der Schienen eine Dichtung trägt, die mindestens zwei Dichtlippen (6) aufweist, wobei eine erste Lippe (102) mit der Kante des beweglichen Teils in Kontakt kommt, und eine zweite Lippe (101) mit dem Rand des fixen Teils entlang der Schiene in Kontakt kommt.

4. Vorrichtung nach Anspruch 2, **dadurch gekennzeichnet, dass** eine Dichtungsschnur oder Dichtung zwischen dem Rahmen und jeder Schiene vor Aufbringen der Kleberschnur, Hauptkleberschnur der Schienen bzw. des Rahmens genannt, auf dem fixen Teil aufgebracht wird.

5. Vorrichtung nach Anspruch 4, **dadurch gekennzeichnet, dass** die Dichtungsschnur Klebstoff oder ein Dichtungsprodukt umfasst.

6. Vorrichtung nach Anspruch 2, **dadurch gekennzeichnet, dass** der obere Teil jeder Schiene einen Winkel ungleich Null in Bezug zur Horizontalen aufweist, wobei der von der Öffnung entfernte Schienenabschnitt höher als der zur Öffnung nahe Schienenabschnitt ist.

7. Vorrichtung nach Anspruch 6, **dadurch gekennzeichnet, dass** der Winkel größer oder gleich 25° ist.

8. Vorrichtung nach Anspruch 2, **dadurch gekennzeichnet, dass** der obere Teil der Schiene (5) einen Abschnitt des Rahmens (4) bedeckt.

9. Vorrichtung nach Anspruch 8, **dadurch gekennzeichnet, dass** der obere Teil der Schiene (5) abgeschnitten ist, so dass sich die Unterbrechung weiter unten auf der zur Öffnung (11) gewandeten Seite als auf der zum fixen Teil (1) gewandten Seite befindet.

10. Vorrichtung nach Anspruch 9, **dadurch gekennzeichnet, dass** die Unterbrechung eine im Wesentlichen kreisbogenförmige konkave Form aufweist.

11. Vorrichtung nach Anspruch 1, **dadurch gekennzeichnet, dass** der Rahmen und/oder die Schienen vertikale Verlängerungen (411, 421) aufweisen, die sich über den unteren Teil des fixen Teils hinaus erstrecken.

12. Vorrichtung nach Anspruch 11, **dadurch gekennzeichnet, dass** mindestens eine der Verlängerungen einen Anschlag (161) trägt, der eine Begrenzung der Verlagerung der beweglichen Platte in Bezug zum fixen Teil in zwei im Wesentlichen zur im Wesentlichen vertikalen Achse senkrechten Richtungen zumindest während der Montage der beweglichen Platte auf dem fixen Teil gewährleistet.

13. Kraftfahrzeug, **dadurch gekennzeichnet, dass** es mindestens eine Glasvorrichtung nach einem der Ansprüche 1 bis 12 umfasst.

14. Fahrzeug nach Anspruch 13, **dadurch gekennzeichnet, dass** die Schließvorrichtung im oberen Teil einer Tür des Fahrzeugs montiert ist, wobei sich die bewegliche Platte zumindest teilweise in einem unteren Teil der Tür verlagert.

## Claims

1. Glazed device intended to be mounted on an inner door shell to form a motor vehicle door or on a bodywork element, comprising a glazed fixed part (1) and a mobile glazed panel (2) that can slide relative to said fixed part along a substantially vertical axis, and can selectively at least partially cover or uncover an opening (11) in said fixed part, said mobile panel being guided along rails (5) supported by said fixed part,
**characterised in that** said rails (5) are secured to said fixed part along the side edges (112, 113) of said opening by a bead of glue (8), and **in that** a frame (4), which extends at least on the side edges and the upper edge of said opening (11), is secured to the rails (5) for its side edges (41, 42) and glued to said fixed part by means of said bead of glue, for its upper edge.

2. Device according to claim 1, **characterised in that** it comprises means for controlling the sealing at a junction between the upper part of said rails and said frame.

3. Device according to claim 2, **characterised in that** each of said rails supports a seal having at least two sealing lips (6), a first lip (102) coming into contact with the rim of said mobile part and a second lip (101) coming into contact with the edge of the fixed part, along said rail.

4. Device according to claim 2, **characterised in that** a sealing bead or a seal is placed between the frame and each rail, before depositing the bead of glue, known as main bead of glue, of said rails, respectively of said frame, on said fixed part.

5. Device according to claim 4, **characterised in that** said sealing bead comprises glue or a sealant.

6. Device according to claim 2, **characterised in that** the upper part of each rail has a non-zero angle relative to the horizontal, the rail portion away from said opening being higher than the rail portion close to said opening.

7. Device according to claim 6, **characterised in that** said angle is greater than or equal to 25°.

8. Device according to claim 2, **characterised in that** the upper part of said rail (5) covers a portion of said frame (4).

9. Device according to claim 8, **characterised in that** the upper part of said rail (5) is cut so that the discontinuity is lower on the side oriented towards said opening (11) than the side oriented towards said fixed part (1).

10. Device according to claim 9, **characterised in that** said discontinuity has a concave shape substantially in an arc of a circle.

11. Device according to claim 1, **characterised in that** said frame and/or said rails have vertical extensions (411, 421), which extend beyond the lower part of said fixed part.

12. Device according to claim 11, **characterised in that** at least one of said extensions supports a stop (161) ensuring that the movement of said mobile panel is limited relative to said fixed part in two directions substantially perpendicular to said substantially vertical axis, at least while said mobile panel is mounted on said fixed part.

13. Motor vehicle **characterised in that** it comprises at least one glazed device according to any one of claims 1 to 12.

14. Vehicle according to claim 13, **characterised in that** said covering device is mounted in the upper part of a door of said vehicle, said mobile panel moving at least partially in a lower part of said door.
